# EUROPEAN PATENT SPECIFICATION

(11) **EP 2 222 172 B1**
(45) Date of publication and mention of the grant of the patent: **21.08.2013**
(21) Application number: 08851540.8
(22) Date of filing: 19.11.2008
(51) Int. Cl.: A23B 4/02, A23B 4/26, A22C 9/00, A22C 17/00

(54) **APPARATUS FOR SALTING, PICKLING OR ADDING ADDITIVES TO MEAT, FISH OR SIMILAR PRODUCTS, AND A METHOD FOR USE THEREOF**
VORRICHTUNG ZUM SALZEN, PÖKELN ODER HINZUFÜGEN VON ADDITIVEN ZU FLEISCH, FISCH ODER ÄHNLICHEN PRODUKTEN UND VERWENDUNGSVERFAHREN DAFÜR
APPAREIL POUR SALER, FAIRE MARINER OU AJOUTER DES ADDITIFS À DE LA VIANDE, DU POISSON OU PRODUITS SIMILAIRES, ET SON PROCÉDÉ D'UTILISATION

(30) Priority: 21.11.2007 DK 200701649
(43) Date of publication of application: 01.09.2010
(73) Proprietor: Nolsoe, Helgi, 160 Argir (FO)
(72) Inventor: Nolsoe, Helgi, 160 Argir (FO)
(74) Representative: Tonnesen, Bo
(86) International application number: PCT/IB2008/003134
(87) International publication number: WO 2009/066154

(56) References cited:
- FR-A- 2 197 532
- GB-A- 1 204 629
- US-A1- 2005 287 258
- US-A1- 2006 280 849

## Description

The present invention relates to an apparatus for salting, pickling or adding additives to meat, fish or similar products, wherein keeping qualities of food products is required.

Pickling is a treatment also named brining or corning, and is a process of preserving food by anaerobic fermentation in brine.

Additives can be used to improve the nutritional value of meat or to enhance the weight of meat products. Moreover, additives improve the texture of the food products and/or a juicier product is achieved.

From various prior art apparatuses, it is common to treat food products in a tank containing a solution of the treatment media to be introduced into the food products and whereby the penetration of said media into the food products is enhanced by needle injections or by exposing said products to ultrasound while in the tank.

The products to be treated are immersed in the treatment media in order to expose as much active surface as possible but in prior art, complete immersion of the products during the treatment period is not guaranteed.

Another essential object for such treatment is to keep a high throughput. Prior art teaches the flow of products coming in batches in order to keep the treatment in control, and it is a big challenge to achieve a high throughput together with the required retention time in the tank.

From FR 2 197 532 it is known to use an apparatus for the treatment of food products, e.g. pork, beef and charcuterie, by using a tank containing a treatment liquid to be inserted into the food products, said tank having an inlet and an outlet, through which chunks of meat enter and leave the tank, and a conveyor provided in the tank and adapted to continuously carry enclosed chunks of meat into the tank through the inlet and out through the outlet.

Despite this prior art providing a continuous process, there is no teaching pointing to a need for a more efficient use of the conveyor and space-saving by means of a compact design, except US 2005 0287258 which discloses an apparatus for disinfecting food products wherein the system requires reduced floor space.

Accordingly, a further object of the present invention is to keep the apparatus in a compact design and with a small space requirement at site.

The invention overcomes the drawbacks of the prior art as pointed out above.

The main objective regarding the throughput is achieved by an apparatus according to claim 1, comprising a tank containing a solution of the treatment media to be introduced into the food products, and an inlet opening and an outlet opening, through which the food products enter and leave the tank, further comprising conveying means in the tank and adapted to continuously carry portions of meat or fish into the tank through the inlet and out of the tank through the outlet, while said portions are carried by the conveyor in a submerged state along a first direction, and then along an opposite second direction, which allows an efficient travelling distance two times the length of the conveyor.

The treatment of food products could make use of several treatment tanks, e.g. to first introduce proteins in a first tank and optionally introduce brine or a marinade in a following tank. Also the tanks can be provided with ultrasound means to improve absorption of the treatment media in the food products. The fact that ultrasound activates cell membranes in food products makes way for the proteins in a treatment solution to access canals to the core of products (see Bruce H. Lipton, 2005, "The Biology of Belief", ISBN-13: 978-0975991473), whereby the treatment process becomes much more efficient and less time-consuming.

The conveying means according to the invention is arranged in such a way that it comprises divider panels extending outwards from the conveyor plane and transversely to the transport direction. A conveyor in the form of a conveyor belt moves through the tank and is enclosed by the tank walls in such a manner that enclosures are defined by any two adjacent dividers and surrounding tank walls meaning that meat products delivered onto the conveyor belt will proceed fully submerged from inlet to outlet, while the retention time in the treatment solution could be as low as less than 10 minutes.

Due to the shorter retention time obtained according to the invention, much less space is required to process a certain amount of meat, whereby our second objective is met.

The tank can also be provided with temperature-regulating means maintaining the temperature at less than 20 °C, preferably 5-10 °C.

Moreover, a method to be used with the apparatus according to the invention includes the steps of:
- providing a tank containing a solution of treatment media to be introduced into the meat or fish,
- continuously introducing the meat or fish to be treated, through an inlet opening of the tank,
- carrying portions of the meat or fish forward in separate enclosures defined on top of a conveyor,
- retaining the meat or fish submerged in the treatment solution contained in the tank, while following a first direction followed by an opposite second direction, and
- removing the meat or fish continuously from the tank through an outlet after a predetermined retention time determined by the conveyor speed.

Additionally, ultrasound means may be activated during all or part of the submerged state of the fish or meat in order to enhance the absorption of additives etc. in the fish or meat.

Further, the method according to the invention could be repeated in an additional tank with a different treatment solution.

The apparatus and method will be better understood from the following detailed description of a preferred embodiment, when read in connection with the accompanying drawings showing:
Fig. 1: an apparatus for salting, pickling or adding additives to food products according to the invention,
Fig. 2: a sectional end view A-A of the apparatus of Fig. 1, wherein ultrasound transducers are placed underneath the apparatus,
Fig. 3: a sectional view like Fig. 2, having further transducers on each side of the tank,
Fig. 4: a plan view of the apparatus of Fig. 1 illustrating the conveyor with dividers,
Fig. 5: a layout of a tank with attached preparation container for protein additives, and
Fig. 6: a flow diagram of a complete method according to the invention including preparation of the proteins.

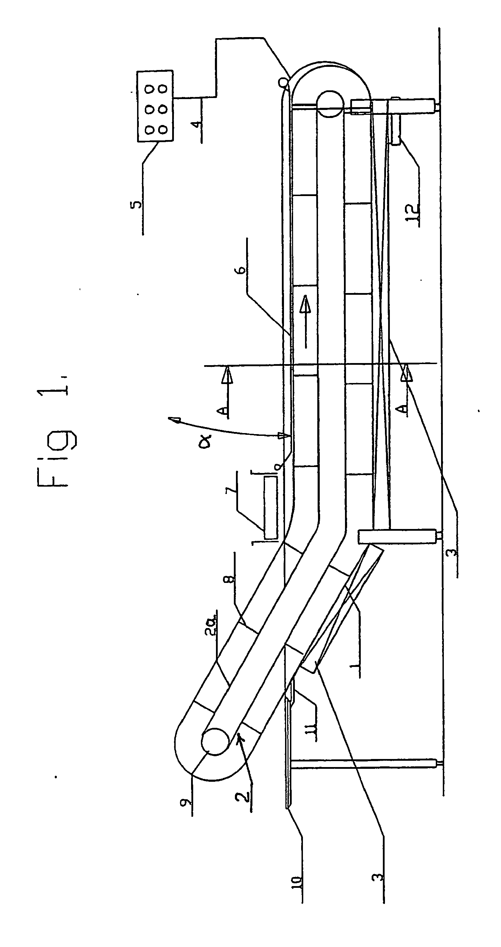

Fig. 1 shows a preferred apparatus for pickling or marinating or adding additives to fish flesh being delivered to the apparatus by a supply conveyor 7. The apparatus comprises a box-shaped tank 1 with a countersunk lid 6, the whole or part of which is hinged horizontally to be opened upwards in an angle **α** giving access to the top flight of an endless conveyor 2 partly or fully submerged in the tank 1. The tank 1 contains a treatment solution (not shown) for salting, pickling or adding additives to the fish flesh carried forward by the supply conveyor 7. Said treatment solution could be brine, a marinade or a solution of proteins, etc.

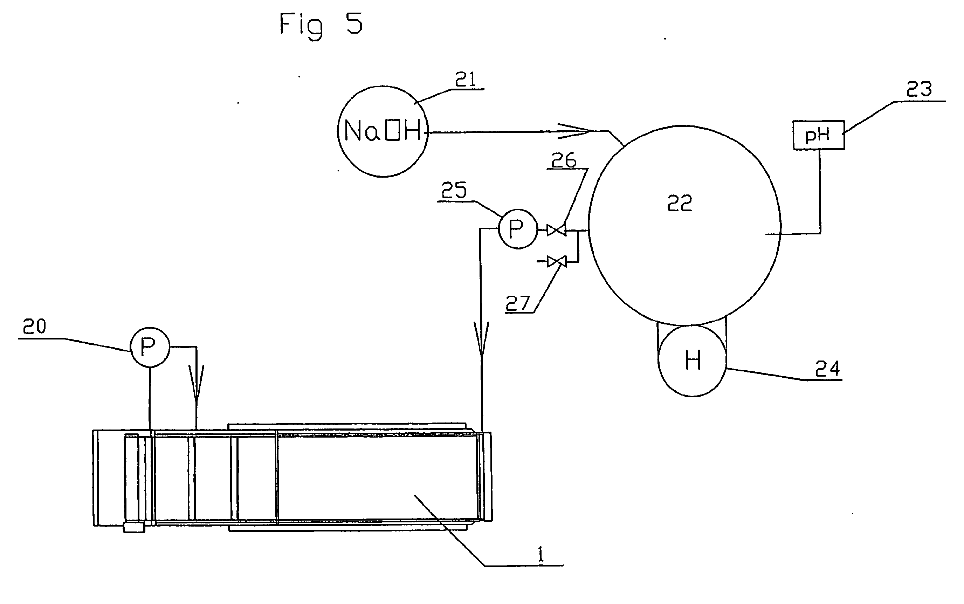

The transport conveyor 2 in Fig. 1 is provided with a variable speed conveyor drive 9 and has an upper flight entering the tank 1 at the inlet opening and leaving the tank 1 at the outlet end, where the fish flesh is ejected onto a receiving table 10 after completion of the treatment chosen. The liquid dripping from the fish flesh is collected in a collector 11 and returned by a pump 20 (Fig. 5) to the tank 1.

The conveyor 2 comprises an endless belt 2a with outwardly protruding dividing walls or carriers 8 attached thereto. Said carriers are uniformly distributed along the belt 2a; defining together with the surrounding tank walls and the lid 6 a number of confined spaces for the fish products to be carried forward while kept submerged in the treatment solution.

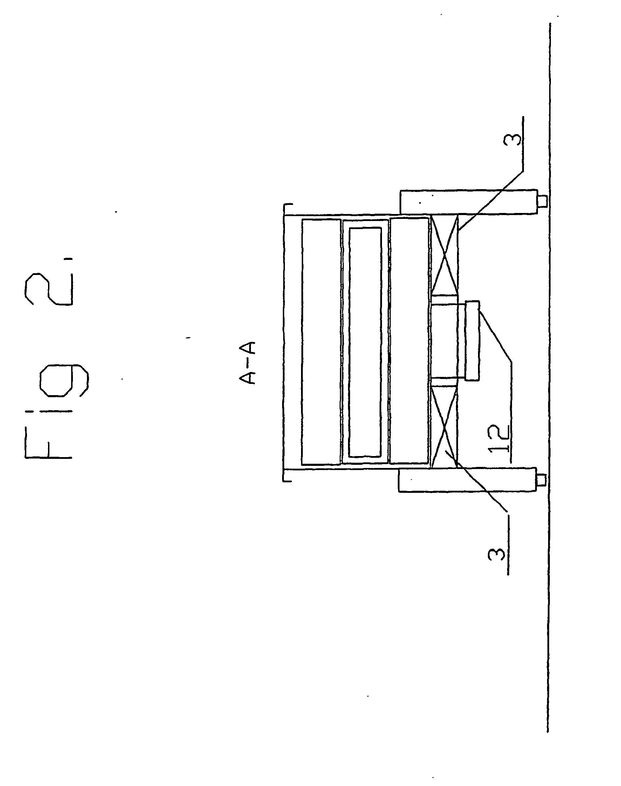

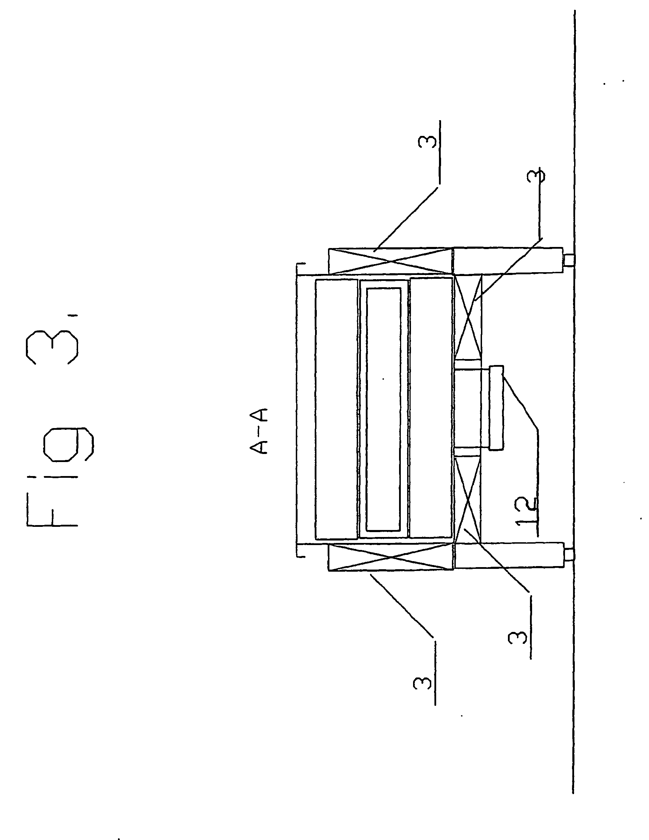

Moreover, a control box 5 is connected via a power line 4 to the tank 1 in order to power optional ultrasound means in the form of transducers 3 extending longitudinally along the tank/conveyor in order to emit ultrasound waves into the treatment solution. The transducers are located either beneath and/or on the sides of the tank 1 (Fig. 2 and Fig. 3, respectively).

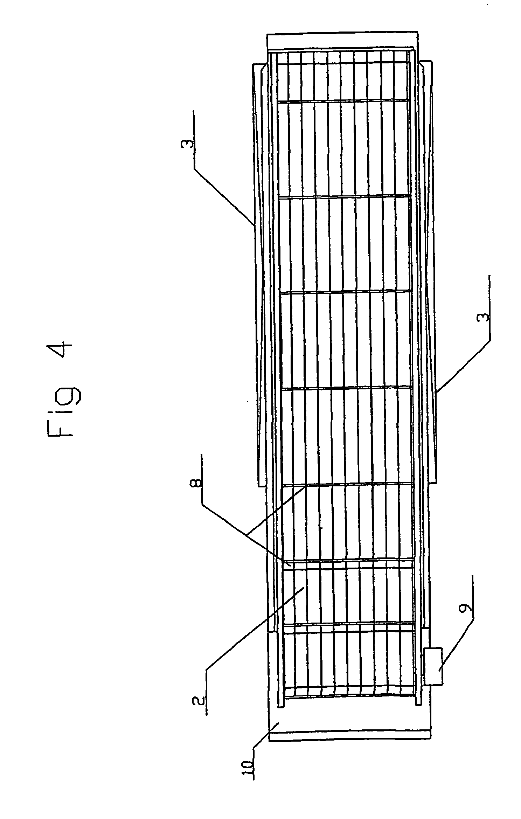

Fig. 4 shows a plan view of the processing system illustrating the "fish flesh chambers" on the transport conveyor belt 2a; defined lengthwise by the dividers 8.

Fig. 5 is a layout of the tank 1 and a preparation container 22 for preparing a protein solution to be delivered to the tank 1. Solubilized ground fish or meat is mixed with cold water and homogenized in a homogenizer 24 attached to the container 22, preferably in a water-to-fish/meat ratio between 12:1 and 6:1; especially 10:1. Next, a food grade base (e.g. NaOH) 21 is added to the homogenized mixture in the container 22 and adjusted (23) to a pH value of 10.5 to 11.5 by stirring. Insoluble particles are removed from the protein solution by sifting (not shown). The protein solution is then transferred to the treatment tank 1 by a pump 25. For maintenance purposes, valves 26, 27 are provided to block the connection between the container 22 and the pump 25 and to drain the container 22, respectively.

The processing in the tank 1 includes chunks of fish or meat being delivered with supply conveyor 7 to a location between dividers 8 on the conveyor belt 2a. The confined food products are carried along the upper flight and then the bottom flight of the conveyor belt 2a while being kept submerged in the treatment solution until they are ejected on the receiving table 10 and optionally transferred for further processing. The speed of movement is adjustable to a required submerged retention time. Ultrasound transducers 3 are activated if required.

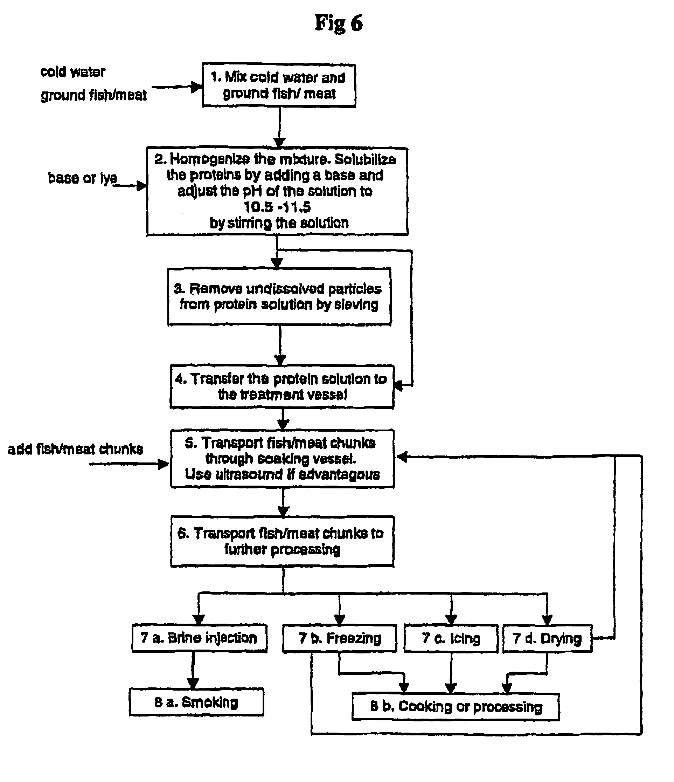

Referring to Fig. 6, further processing could be e.g. machine pumping/injection of brine 7a, freezing 7b, icing or ice packing 7c and drying 7d.

After brine injection 7a, smoking 8a could be an additional treatment. Cooking or other processing 8b could follow the process steps 7b to 7d. Advantageously, products could repeat the protein treatment stage and excessive water be evaporated after each stay in the soaking tank and in that way products could be build up to a certain size or weight. Thus completely new products can be developed, increasing the value of an intrinsic low-cost raw material.

Irrespectively of the invention being exemplified in connection with the fishing industry in the above discussion, the invention will be equally suited for a variety of meat from other animals.

## Claims

1. Apparatus for salting, pickling or adding additives to meat, fish or the like, comprising a tank containing a solution of treatment media to be introduced into the food products, said tank having an inlet opening and an outlet opening, through which chunks of meat or fish enter and leave the tank, and a conveying means (2) contained in the tank (1) and suitable to continuously bring enclosed portions of meat or fish into the tank through the inlet and out through the outlet, said portions being carried by conveying means (2) in a submerged state along a first direction followed by a second, opposite direction thereof, **characterised in that** the inlet and outlet of the tank are so arranged relative to the conveyor belt that the food product delivered onto the conveyor belt, during use, will proceed fully submerged from the inlet to the outlet along an effective travelling distance almost two times the length of said conveying means (2).

2. Apparatus according to claim 1, wherein said conveying means (2) is a conveyor belt (2a) having dividing walls (8) transversal to the width of the belt, uniformly dividing the belt into separate sections and further confined to the sides and top by the tank walls.

3. Apparatus according to claim 1 or 2, wherein the conveyor means (2) is comprised of a partly submerged sloping part with inlet and outlet openings, and a submerged substantially horizontal part.

4. Apparatus according to any of the preceding claims, wherein the tank (1) further comprises ultrasound means (3) to enhance absorption of treatment media by the food products.

5. Apparatus according to claim 4, wherein said ultrasound means comprises one or more transducers (3) arranged on the exterior of the tank (1).

6. Apparatus according to any of the preceding claims, **characterized by** further comprising a protein preparation plant having a container (22) receiving a mixture of water and ground fish or meat from a homogenizer (24), and a supply (21) of food grade base, e.g. NaOH, being connected to the container (22) which again is attached to the treatment tank (1) via a pump (25).

7. Method of salting, pickling or adding additives to meat, fish or the like, comprising:
- providing a tank (1) containing a solution of treatment media to be introduced into the meat or fish,
- continuously introducing the meat or fish to be treated, through an inlet opening of the tank,
- carrying portions of the meat or fish forward in separate enclosures arranged on top of a conveyor,
- retaining the meat or fish submerged in the treatment solution contained in the tank, while moving in a first direction followed by an opposite second direction,
- continuously removing the meat or fish from the tank through an outlet after a predetermined retention time determined by the conveyor speed,
- conveying the portions of meat or fish fully submerged in the solution of treatment media from the inlet in the tank to the outlet in the tank along an effective travelling distance almost two times the length of the conveyor.

8. Method according to claim 7, wherein the portions of meat or fish are forced forward by dividers (8) on the conveyor (2) and into separate enclosures defined by the conveyor (2) and surrounding walls of the tank (1).

9. Method according to claim 8, wherein the meat or fish to be treated is forced to stay submerged in the treatment solution during all or part of the travel through the tank.

10. Method according to any of the claims 7-9, wherein ultrasound means (3) are acting on the fish or meat during all or part of the submerged state.

11. Method according to any of the claims 7-10 comprising prior to the treatment in the tank (1) a step of preparing a protein mixture from water and ground fish or meat in a ratio between 12:1 and 6:1, preferably 10:1, which is then adjusted to a suitable pH level such as the interval of 10.5 to 11.5 by adding a food grade base, e.g. NaOH, before being delivered to the tank (1).

## Patentansprüche

1. Vorrichtung zum Salzen, Pökeln oder Hinzufügen von Additiven zu Fleisch, Fisch oder ähnlichen Produkten, wo die Vorrichtung einen Tank umfasst, der eine in die Lebensmittel einzuführende Lösung von Behandlungsmittel enthält, wo der Tank eine Einlassöffnung und eine Auslassöffnung hat, wodurch Stücke von Fleisch oder Fisch in den Tank hereinkommen und den Tank verlassen, sowie eine in dem Tank (1) eingedämmte Fördervorrichtung (2), die dazu geeignet ist fortlaufend Portionen von einbezogenem Fleisch oder Fisch durch den Einlass in den Tank und durch den Auslass heraus aus dem Tank zu bringen, wo die Portionen von einer Fördervorrichtung (2) in versenktem Zustand entlang eine erste Richtung befördert werden und danach in eine zweite, davon umgekehrte Richtung, **dadurch gekennzeichnet, dass** der Einlass und der Auslass des Tanks im Verhältnis zu dem Förderband so angeordnet sind, dass die Lebensmittel, die auf den Förderband gebracht werden, während des Einsatzes völlig versenkt vom Einlass bis zum Auslass voranschreiten über einen effektiven Verfahrweg, der fast zweimal so lang als die Fördervorrichtung (2) ist.

2. Vorrichtung nach Anspruch 1, wo die Fördervorrichtung (2) ein Förderband (2a) mit Trennwänden (8) transversal zur Breite des Bands ist, so dass der Band in getrennte Abschnitte gleichförmig eingeteilt wird und ferner zu den Seiten und oben von den Tankwänden abgegrenzt wird.

3. Vorrichtung nach Anspruch 1 oder 2, wo die Fördervorrichtung (2) aus einem teilweise versenkten, schrägen Teil mit Einlass- und Auslassöffnungen, sowie einem versenkten, im Wesentlichen horizontalen Teil besteht.

4. Vorrichtung nach einem der vorigen Ansprüche, wo der Tank (1) ausserdem eine Ultraschallvorrichtung (3) umfasst, um die Aufnahme von Behandlungsmittel in die Lebensmittel zu fördern.

5. Vorrichtung nach Anspruch 4, wo die Ultraschallvorrichtung einen oder mehrere Umformer (3) umfasst, die auf der Aussenseite des Tanks (1) angeordnet sind.

6. Vorrichtung nach einem der vorigen Ansprüche, **dadurch gekennzeichnet, dass** die Vorrichtung ausserdem eine Proteinaufbereitungsanlage umfasst, die einen Behälter (22) hat, der eine Mischung von Wasser und gehacktem Fisch oder Fleisch von einem Homogenisator (24) erhält, sowie eine mit dem Behälter (22) verbundene Zufuhr (21) von Lebensmittelgerechter Base, z.B. NaOH, und wo der Behälter (22) durch eine Pumpe (25) an dem Behandlungstank (1) angeschlossen ist.

7. Verfahren zum Salzen, Pökeln oder Hinzufügen von Additiven zu Fleisch, Fisch oder ähnlichen Produkten, wo das Verfahren folgende Schritte umfasst:
- Erbringung eines Tanks (1), der eine in das Fleisch oder den Fisch einzuführende Lösung von Behandlungsmittel enthält,
- das zu behandelnde Fleisch oder Fisch durch eine Einlassöffnung des Tanks fortlaufend einzuführen,
- Portionen von dem Fleisch oder Fisch in getrennten Abschnitten oben auf einer Fördervorrichtung vorwärts zu tragen,
- das Fleisch oder den Fisch in der in dem Tank vorhandenen Behandlungslösung, während des Transports in eine erste Richtung und anschliessend in eine zweite, umgekehrte Richtung versenkt zu halten,
- das Fleisch oder den Fisch von dem Tank durch einen Auslass nach einer vorbestimmten und durch die Fördergeschwindigkeit festgelegten Laufzeit fortlaufend zu entfernen,
- die Portionen von Fleisch oder Fisch vom Einlass des Tanks bis zum Auslass des Tanks entlang einen effektiven Verfahrweg, der fast zweimal so lang als der Förderband ist, völlig versenkt in der Behandlungslösung zu fördern.

8. Verfahren nach Anspruch 7, wo die Portionen von Fleisch oder Fisch von Trennwänden (8) nach vorne auf der Fördervorrichtung (2) gezwungen werden und in getrennte Abschnitte hinein, die durch die Fördervorrichtung (2) und umgebene Wände des Tanks (1) definiert werden.

9. Verfahren nach Anspruch 8, wo das zu behandelnde Fleisch oder Fisch dazu gezwungen wird, in der Behandlungslösung versenkt zu bleiben während des ganzen oder eines Teils des Wegs durch den Tank.

10. Verfahren nach einem der Ansprüche 7-9, wo eine Ultraschallvorrichtung (3) auf den Fisch oder das Fleisch einwirken während des ganzen oder eines Teils des versenkten Zustands.

11. Verfahren nach einem der Ansprüche 7-10, das vor der Behandlung im Tank (1) den Schritt umfasst, eine Proteinmischung von Wasser und gehacktem Fisch oder Fleisch vorzubereiten im Verhältnis zwischen 12:1 und 6:1, vorzugsweise 10:1, die dann an eine passende pH-Ebene angepasst wird, wie zum Beispiel das Intervall von 10,5 bis 11,5 durch den Zusatz von einer Lebensmittelgerechter Base, z.B. NaOH, bevor die Mischung dem Tank (1) zugeführt werden.

## Revendications

1. Appareil pour saler, faire mariner ou ajouter des additifs à de la viande, du poisson ou similaire, comprenant un réservoir contenant une solution de média de traitement à introduire dans les produits alimentaires, ledit réservoir ayant une ouverture d'entrée et une ouverture de sortie, à travers lesquelles des morceaux de viande ou de poisson entrent et sortent du réservoir, et un moyen de transport (2) contenu dans le réservoir (1) et approprié pour amener, de manière continue, des portions enveloppées de viande ou de poisson dans le réservoir à travers l'entrée et en sortant à travers la sortie, lesdites portions étant portées par des moyens de transport (2) dans un état submergé le long d'une première direction suivi par une deuxième direction, **caractérisé en ce que** l'entrée et la sortie du réservoir sont disposées par rapport au transporteur de manière à ce que le produit alimentaire fourni sur le transporteur va procéder, pendant l'utilisation, complètement submergé de l'entrée à la sortie le long d'une distance efficace de parcours d'environ deux fois la longueur dudit moyen de transport (2).

2. Appareil selon la revendication 1, dans lequel ledit moyen de transport (2) est un transporteur (2a) ayant des parois divisées (8) transversales par rapport à la largeur du transporteur, divisant uniformément le transporteur dans des sections séparées et ultérieurement confiné aux côtés et sur le dessus par les parois du réservoir.

3. Appareil selon la revendication 1 ou la revendication 2, dans lequel le moyen transporteur (2) est compris d'une partie oblique partiellement submergée avec des ouvertures d'entrée et de sortie, et d'une partie horizontale partiellement submergée.

4. Appareil selon l'une quelconque des revendications précédentes, dans lequel le réservoir (1) comprend en outre des moyens ultrasons (3) pour augmenter l'absorption du média de traitement par les produits alimentaires.

5. Appareil selon la revendication 4, dans lequel lesdits moyens ultrasons comprennent au moins un transducteur (3) disposé sur l'extérieur du réservoir (1).

6. Appareil selon l'une quelconque des revendications précédentes, **caractérisé en ce qu'**il comprend en outre une installation de préparation de protéine ayant un réservoir (22) qui reçoit un mélange d'eau et de poisson ou de la viande moulu à partir d'un homogénéisateur (24), et une alimentation (21) de base comestible, p.ex. du NaOH, étant raccordée au réservoir (22) qui est encore attaché au réservoir de traitement (1) par l'intermédiaire d'une pompe (25).

7. Procédé pour saler, faire mariner ou ajouter des additifs à de la viande, du poisson ou similaire, comprenant
- la fourniture d'un réservoir (1) contenant une solution de média de traitement à introduire dans la viande ou le poisson,
- l'introduction continue de la viande ou du poisson à être traité, à travers une ouverture d'entrée du réservoir,
- le transport en avant de portions de la viande ou du poisson dans des enceintes séparées disposées sur le dessus d'un transporteur,
- la rétention de la viande ou du poisson submergé dans la solution de traitement contenue dans le réservoir lors du déplacement dans une première direction suivie par une deuxième direction opposée,
- l'enlèvement continu de la viande ou du poisson du réservoir à travers une sortie suivant un temps de rétention prédéterminé qui est déterminé par la vitesse du transporteur,
- la transportation des portions de viande ou de poisson complètement submergé dans la solution du média de traitement à partir de l'entrée dans le réservoir jusqu'à la sortie dans le réservoir le long d'une distance efficace de circulation/parcours d'environ deux fois la longueur du transporteur.

8. Procédé selon la revendication 7, dans lequel les portions de viande ou de poisson sont forcées en avant par des diviseurs (8) sur le transporteur (2) et jusque dans des enceintes séparées définies par le transporteur (2) et des parois entourantes du réservoir (1).

9. Procédé selon la revendication 8, dans lequel la viande ou le poisson à être traité sera forcé de rester submergé dans la solution de traitement pendant tout le transport ou pendant une partie du transport à travers le réservoir.

10. Procédé selon l'une quelconque des revendications 7 à 9, dans lequel les moyens ultrasons (3) agissent sur le poisson ou la viande pendant tout l'état submergé ou pendant une partie de l'état submergé.

11. Procédé selon l'une quelconque des revendications 7 à 10 comprenant, préalablement au traitement dans le réservoir (1), une étape de préparation d'un mélange de protéine à partir d'eau et de poisson ou de viande moulu dans un rapport entre 12:1 et 6:1, préférablement 10:1, qui est alors ajusté pour atteindre un niveau de pH convenable tel que l'intervalle de 10.5 à 11.5 en ajoutant une base comestible, telle que du NaOH, avant d'être fourni au réservoir (1).
